# EUROPEAN PATENT APPLICATION

(11) **EP 2 490 400 A1**
(43) Date of publication of application: **22.08.2012**
(21) Application number: 10823324.8
(22) Date of filing: 30.09.2010
(51) Int. Cl.: H04L 29/08, H04L 12/56

(54) **TRANSMISSION CONTROL METHOD FOR PACKET COMMUNICATION AND PACKET COMMUNICATION SYSTEM**

(30) Priority: 14.10.2009 JP 2009236765
(71) Applicant: NEC Corporation, Tokyo 108-8001 (JP)
(72) Inventor: AOKI, Yuuichi, Tokyo 108-8001 (JP)
(74) Representative: Vossius & Partner
(86) International application number: PCT/JP2010/067605
(87) International publication number: WO 2011/046056

(57) **Abstract**

Transmission of a packet including a header having a sequence number area for storing a sequence number, and a payload, the payload storing a data signal or a control signal, is controlled. A first communication device generates a sequence number for data signal to be assigned to a data packet storing the data signal in the payload, stores the sequence number for data signal in each sequence number area of the data packet, and transmits the data packet from the first communication device to a second communication device, and transmission control for the data packet is carried out based on the sequence number for data signal. Similarly, the first communication device generates a sequence number for control signal to be assigned to a control packet storing the control signal in the payload independently of the sequence number for data signal, stores the sequence number for control signal in each sequence number area of the control packet, and transmits the control packet from the first communication device to the second communication device, and transmission control for the control packet is carried out based on the sequence number for control signal.

## Description

### Technical Field

This invention relates to transmission control in packet communication, and more particularly, to transmission control in packet communication that uses a sequence number to be added to a header of a packet.

### Background Art

The packet communication is embodied in various forms such as wireless communication and high-speed serial communication. A packet is generally constructed by a payload and a header.

There are two cases in which a signal is stored as the payload. In one of those cases, a data signal for video, audio, or Web is stored, and in the other case, a control signal for controlling an operation of an IC and the like is stored.

Stored in the header is information on how to treat a payload, such as a flag representing whether the content of the payload is a control signal or a data signal and destination information. A sequence number may be assigned to the header for various purposes.

Sequence numbers are referred to for rearranging delivered packets in a case where individual packets are transmitted on various paths and are not always received in a transmitted sequence as in a mesh network. Moreover, in a system such as one-to-one communication in which it is guaranteed that packets are received in the transmission order, sequence numbers are used to detect an undelivered packet by checking whether or not a sequence number is missing in the received packets, and to request a sender to retransmit the packet.

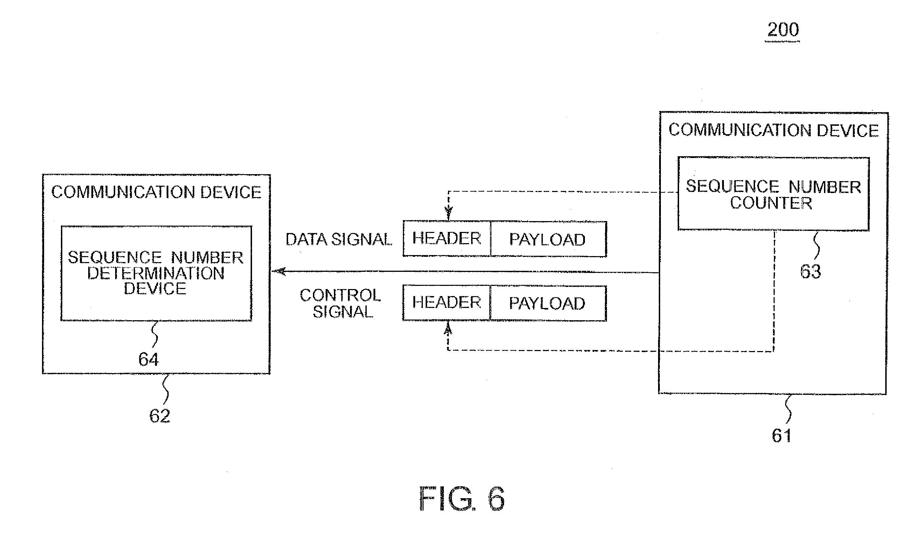

A description is given of a conventional packet communication system 200 referring to FIG. 6. The packet communication system 200 includes communication devices 61 and 62.

The communication device 61 is a device on a transmission side, and includes a sequence number counter 63. The sequence number counter 63 generates a series of sequence numbers. The generated sequence numbers are sequentially assigned to packets to be transmitted.

On the other hand, the communication device 62 is a device on a reception side, and includes a sequence number determination device 64. The sequence number determination device 64 extracts the sequence numbers from the received packets, and checks whether or not a sequence number is missing. When a missing sequence number is found, the communication device 62 transmits a retransmission request packet storing the missing sequence number to the communication device 61. When the communication device 61 receives the retransmission request packet, the communication device 61 selects a packet to be retransmitted based on the stored sequence number, and transmits the selected packet to the communication device 62.

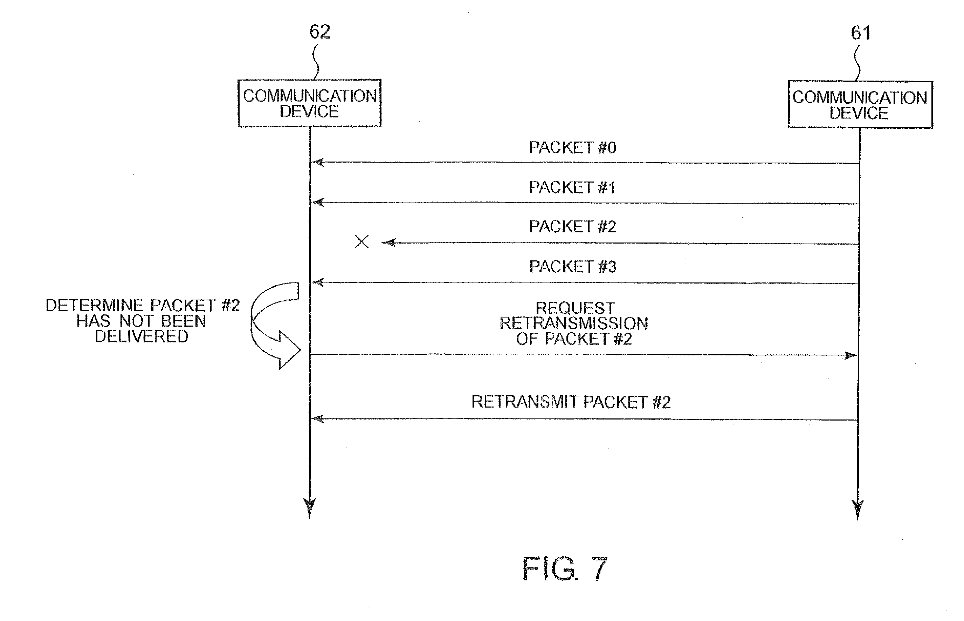

For example, as illustrated in FIG. 7, in a case where the sequence number counter 63 generates sequence numbers 0, 1, 2, and 3, and the communication device 61 transmits packets #0, #1, #2, and #3 to which the generated sequence numbers are respectively assigned, but the packet #2 is not delivered to the communication device 62, the communication device 62 determines, through the use of the sequence number determination device 64, that the packet #2 is not delivered based on a fact that the packet #3 is received following the packet #1, and transmits a retransmission request packet for requesting retransmission of the packet #2 to the communication device 61. The communication device 61 will retransmit the packet #2 to the communication device 62 in response to the retransmission request packet.

Literatures describing technologies relating to this invention include Japanese Unexamined Patent Application Publication (JP-A) Nos. 2001-211195, 2004-253886, and Hei 08-032531 (hereinafter, referred to as Patent Literatures 1, 2, and 3, respectively).

The sequence number does not increase limitlessly, and the number of digits is limited. The header of the packet has a role to store various pieces of information in addition to the sequence number, and an increase in the number of digits of the sequence number leads to an increased length of the header. If the length of the header increases, the size of data stored in the payload, which is an original purpose of the data communication, decreases relatively in the packet, resulting in a decrease in transmission efficiency.

On the other hand, if the transmission efficiency is given high priority by reducing the number of digits for the sequence number, the sequence number solon overflows. The overflowed sequence number is generally returned to zero, and is incremented again, and hence the overflow itself will not present a problem. However, if the overflow occurs in a short period, different packets to which the same sequence number is assigned will be generated in that short period. As a result, when a retransmission request for a packet A is received, the same sequence number may be assigned to a different packet B having a different content of the payload in a communication device of a transmission source, and there is a possibility that the packet B is transmitted instead of the packet A.

### Disclosure of the Invention

### Problems to be Solved by the Invention

This invention has been made in view of the foregoing problems, and has an object of simultaneously realizing (1) maintenance of transmission efficiency, and (2) avoidance of a disorder in terms of transmission control which is generated in a case where a sequence number is assigned to a packet and then the sequence number wraps around, which results in the same sequence number being assigned to a difference packet.

### Means to Solve the Problems

In order to achieve the above-mentioned objects, this invention provides a transmission control method in packet communication and a packet communication system as described below.

According to an aspect of this invention, there is provided a transmission control method in packet communication of controlling transmission of a packet including a header having a sequence number area for storing a sequence number, and a payload, the payload storing a data signal or a control signal, the transmission control method in packet communication including: generating, by a first communication device, a sequence number for data signal to be assigned to a data packet storing the data signal in the payload, storing the sequence number for data signal in each sequence number area of the data packet, and transmitting the data packet from the first communication device to a second communication device, the first communication device and the second communication device carrying out transmission control for the data packet based on the sequence number for data signal; and generating, by the first communication device, a sequence number for control signal to be assigned to a control packet storing the control signal in the payload independently of the sequence number for data signal, storing the sequence number for control signal in each sequence number area of the control packet, and transmitting the control packet from the first communication device to the second communication device, the first communication device and the second communication device carrying out transmission control for the control packet based on the sequence number for control signal.

According to another aspect of this invention, there is provided a packet communication system for controlling transmission of a packet including a header having a sequence number area for storing a sequence number, and a payload, the payload storing a data signal or a control signal, the packet communication system including: a first communication device; and a second communication device, in which: the first communication device generates a sequence number for data signal to be assigned to a data packet storing the data signal in the payload, stores the sequence number for data signal in each sequence number area of the data packet, and transmits the data packet from the first communication device to a second communication device, and the first communication device and the second communication device carry out transmission control for the data packet based on the sequence number for data signal; and the first communication device generates a sequence number for control signal to be assigned to a control packet storing the control signal in the payload independently of the sequence number for data signal, stores the sequence number for control signal in each sequence number area of the control packet, and transmits the control packet from the first communication device to the second communication device, and the first communication device and the second communication device carry out transmission control for the control packet based on the sequence number for control signal.

### Effect of the Invention

According to this invention, when a packet is transmitted, a sequence number for data signal is stored in the sequence number area of the packet whose payload is a data signal, and a sequence number for control signal is stored in the sequence number area of the packet whose payload is a control signal. Accordingly, the transmission control for the data packet is carried out based on the sequence number for data signal, and the transmission control for the control packet is carried out based on the sequence number for control, signal. As a result, compared with the conventional packet communication system having the same number of digits in the sequence number area, it is possible to increase the period of the wraparound of the sequence number even with the same size of the sequence number area.

### Brief Description of the Drawing

FIG. 1 is a block diagram of a packet communication system i.00 according to an embodiment of this invention.
FIG. 2 is a diagram illustrating a configuration of a packet used in the packet communication system 100.
FIG. 3 is a diagram describing retransmission control by the packet communication system 100.
FIG. 4 is a diagram describing a variant example of the packet communication system 100 for transmitting a dummy data packet and a dummy control packet.
FIG. 5 is a diagram describing a variant example of the packet communication system 100 for transmitting a dummy control packet.
FIG. 6 is a block diagram illustrating a conventional packet communication system 200.
FIG. 7 is a diagram describing retransmission control by the packet communication system 200.

### Best Mode for Embodying the Invention

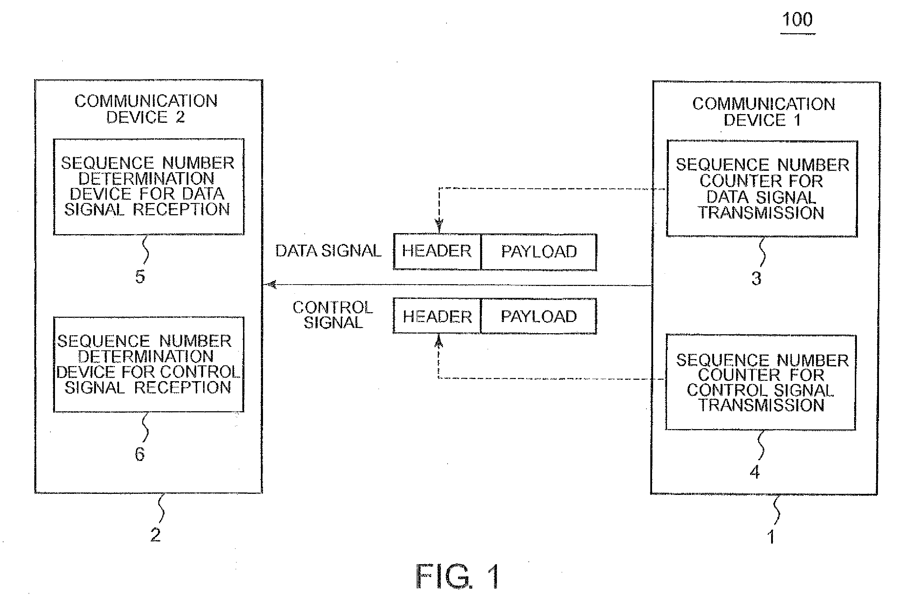

A description is now given of a packet communication system 100 according to an embodiment of this invention referring to FIG. 1. The packet communication system 100 is constituted by a communication device 1 on a transmission side and a communication device 2 on a reception side. On this occasion, the communication devices 1 and 2 are, for example, both personal computers, wireless terminals, or devices connected via a wired high-speed serial bus such as the universal serial bus (USB), the IEEE 1394, or the PCI Express. Moreover, there are semiconductor chips carrying out high-speed serial communication therebetween today, and the communication devices 1 and 2 may be both semiconductor chips of this type.

The communication device 1 includes a sequence number counter for data signal transmission 3, and a sequence number counter for control signal transmission 4.

The sequence number counter for data signal transmission 3 generates a sequence number for data signal corresponding to each packet which is used to store and transmit a data signal in the payload, namely each data packet. The generated sequence number for data signal is stored at a predetermined position in the header of the data packet.

The sequence number counter for control signal transmission 4 generates a sequence number for control signal transmission. The sequence number counter for control signal transmission 4 generates a sequence number for control signal corresponding to each packet which is used to transmit a control signal to the payload, namely each control packet. The generated sequence number for control signal is stored at a predetermined position in the header of the control packet.

The sequence number for data signal and the sequence number for control signal are independently generated. When a data packet is transmitted, the communication device 1 stores a sequence number for data signal generated by the sequence number counter for data signal transmission 3 for the data packet in the data packet, and transmits the data packet to the communication device 2. Similarly, when a control packet is transmitted, the communication device 1 stores a sequence number for control signal generated by the sequence number counter for control signal transmission 4 for the control packet in the control packet, and transmits the control packet to the communication device 2.

The communication device 2 includes a sequence number determination device for data signal reception 5, and a sequence number determination device for control signal reception 6.

The sequence number determination device for data signal reception 5 detects an undelivered data packet based on the sequence numbers for data signal acquired from data packets received from the communication device 1.

The sequence number determination device for control signal reception 6 detects an undelivered control packet based on the sequence numbers for control signal acquired from control packets received from the communication device 1.

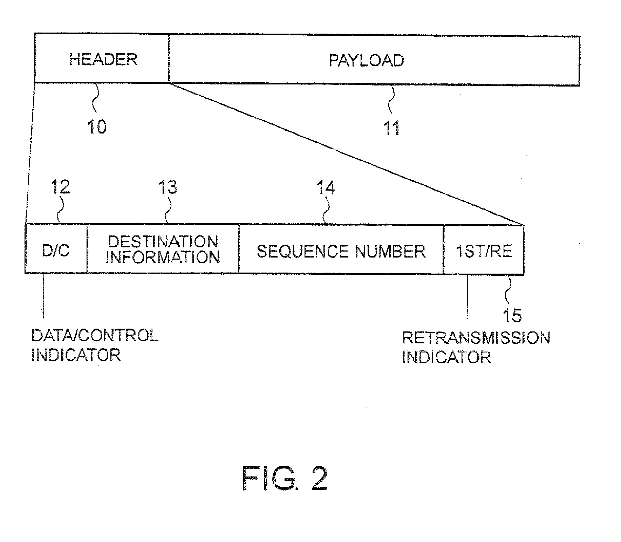

A description is now given of a configuration of the data packet and the control packet referring to FIG. 2. Every packet is constituted by a header 10 and a payload 11, and the header 10 is constituted by a data/control indicator area 12, a destination information area 13, a sequence number area 14, and a retransmission indicator 1 area 5. The data/control indicator area 12 stores a value indicating whether the packet is a data packet or a control packet. The destination information area 13 stores an address of a transmission destination of the packet. A specific example of the address is a number of a terminal of the opposite party, information on which antenna is used for serial communication from a baseband IC to a wireless IC of a mobile terminal or the like having at least two antennas, or the like. The sequence number area 14 stores a sequence number for data signal if the packet is a data packet, or a sequence number for control signal if the packet is a control packet. The retransmission indicator 1 area 5 stores a value indicating whether the transmission, of the packet is for the first time or for the second or subsequent time. A packet storing a data signal in the payload 11 is a data packet, and a packet storing a control signal in the payload 11 is a control packet.

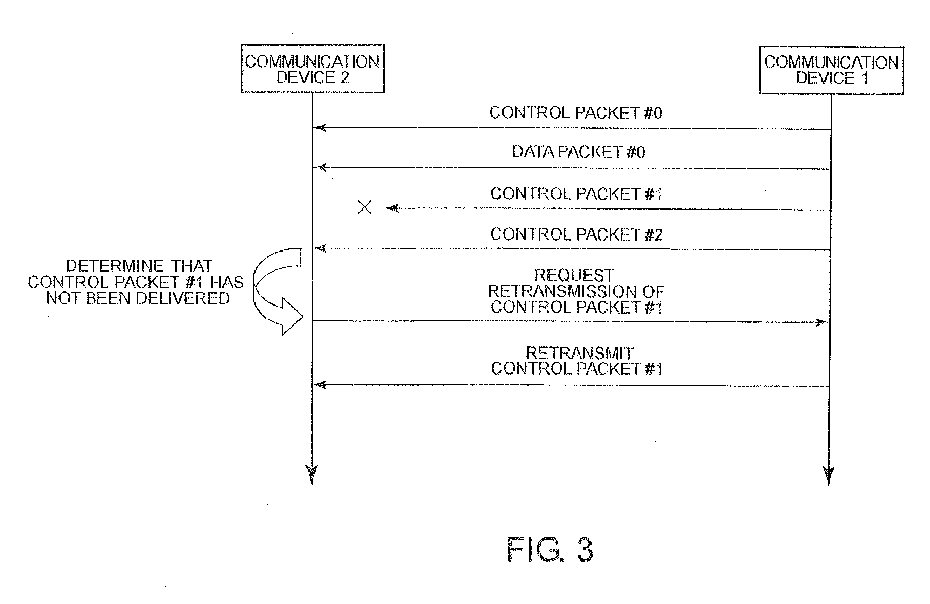

A description is now given of transmission control by the packet communication system a 100 preferring to FIG. 3. On this occasion, data packets whose sequence numbers are 0, 1, ..., n (n is an integer) are respectively denoted by data packet #0, data packet #1, ..., data packet #n. Similarly, control packets whose sequence numbers are 0, 1, ..., n (n is an integer) are respectively denoted by control packet #0, control packet #1, ..., control packet #n. Moreover, the communication device 1 and the communication device 2 carry out one-to-one communication, and it is guaranteed that packets arrive in the order of transmission.

When a control packet #0, a data packet #0, a control packet #1, and a control packet #2 are sequentially transmitted from the communication device 1 to the communication device 2, it is assumed that the control packet #1 is not delivered to the communication device 2 for some reason.

In the communication device 2, the sequence number determination device for data signal reception 5 and the sequence number determination device for control signal reception 6 acquire the sequence numbers from the received packets. In this case, the control packet #1 is not delivered to the communication device 2, and the sequence number determination device for control signal reception 6 acquires the sequence number 2 following the sequence number 0, and hence the sequence number determination device for control signal reception 6 determines that the transmission of the contz-ol packet #1 failed based on this fact, and notifies a control device of the communication device 2, which is not shown, of the failure. In response to this notification, the control device transmits a packet requesting retransmission of the control packet #1 to the communication device 1.

This retransmission request is carried out by a packet generally referred to as NACK. Information (retransmission request subject packet type information) indicating whether a packet subject to the retransmission request is a control packet or a data packet, and a sequence number are added to the payload of the NACK. On this occasion, the communication device 2 transmits the NACK whose retransmission request subject packet type information is a control packet and whose sequence number is 1 to the communication device 1.

When the communication device 1 receives the NACK, the communication device 1 acquires the retransmission request subject packet type and the sequence number from the payload, extracts the corresponding packet from a retransmission buffer or the like, and retransmits the packet to the communication device 2. On this occasion, the control packet #1 is extracted from the retransmission buffer or the like, and is retransmitted.

With the packet communication system 200, the transmission control is carried out by providing the two sets of the sequence number counter on the transmission side and the sequence number determination device on the reception side for the data signal and the control signal, and by assigning the series of sequence numbers independent of each other to the data signal and the control signal.

For example, in a case where the sequence number counter for data signal transmission 3 and the sequence number counter for control signal transmission 4 respectively generate sequence numbers in three bits, the sequence number for data signal transmission wraps around for a sequence of a data packet #0, a data packet #1,..., a data packet #7, and the sequence number for control signal transmission wraps around for a sequence of a control packet #0, a control packet #1, ..., a control packet #7. In this case, the sequence numbers for data signal transmission and the sequence numbers for control signal transmission are asynchronous values generated independently of each other. In a case where the control packet #1 has not been delivered and a retransmission request is delivered during subsequent seven control packets #2, #3, #4, #5, #6, #7, and #0, the retransmission is normally carried out. Even if a large number of data packets are transmitted during this period, these data packets do not affect the sequence numbers for control signal.

In contrast, a conventional packet communication system uses only one set of the sequence number counter on the transmission side and the sequence number determination device on the reception side, to carry out the transmission control based on one series of sequence numbers regardless of the types of packets. If sequence numbers in three bits are generated as in the above-mentioned example, the retransmission request most be completed within total of seven packets of control packets and data packets. Therefore, even if the sequence counters with the same digits are used, the failure in the retransmission occurs less frequently in the packet communication system 100.

A description is now given of a variation of the above-mentioned embodiment. In the above-mentioned operation, it is detected whether or not there is a missing sequence number in the sequence numbers acquired from the received packets, and if there is a missing sequence number, a non-delivery of a packet to which the sequence number is assigned is detected. With this detection method, it is possible to detect a non-delivery of a packet immediately before a received packet, but a non-delivery of a packet to be received in the last place cannot be detected. Thus, based on the above-mentioned operation, even if a data packet or a control packet transmitted in the last place by the communication device 1 is not delivered, the communication device 2 cannot detect a non-delivery of these packets, and cannot surely determine the deliveries of the last data packet or control packet.

In order to address this problem, according to the variation of the abode-mentioned embodiment, the communication device 1 transmits, to the communication device 2, a dummy data packet following a data packet which is required to be delivered without fail, such as a data packet transmitted in the last place of a series of data packets. Similarly, the communication device 1 transmits, to the communication device 2, a dummy control packet following a control packet which is required to be delivered without fail, such as a control packet transmitted in the last place or a series of control packets. Both of the dummy data packet and the dummy control packet are dummies, and do not need to store meaningful data in the payload.

A description is now given referring to PIG. 4, and for example, in a case where the sequence number of a data packet transmitted in the last place by the communication device 1 to the communication device 2 is 0, and the sequence number of the last control packet is 5, the communication device 1 generates a dummy data packet #1 after the data packet #0, and transmits the dummy data packet #1 to the communication device 2. Similarly, the communication device 1 generates a dummy control packet #6 after the control packet #5, and transmits the dummy control packet #6 to the communication device 2. Both the dummy data packet and the dummy control packet are generated and transmitted in order to more surely detect a non-delivery of an immediately preceding packet. Moreover, even if the dummy packet itself is not delivered, or the detection of the non-delivery is not assured, the communication is not affected.

In a case where both of the dummy packet and the packet immediately before the dummy packet are not delivered, the non-deliveries of both of the packets cannot be detected, but it is sufficient that any one of those two packets is delivered. Accordingly, if the packet immediately before the dummy packet is delivered and the dummy packet is not delivered, the communication substantially completes, and if the packet immediately before the dummy packet is not delivered and the dummy packet is delivered, the communication device 2 can detect the sequence number of the non-delivered packet based on the sequence number of the dummy packet, and can request the communication device 1 to retransmit the packet.

A possibility that both the dummy packet and the packet immediately before the dummy packet are undelivered and hence the communication does not complete, namely a possibility that both the two successive packets are not delivered, is surely low compared with a possibility in the conventional method which does not transmit a dummy packet after the last packet that the last packet is not delivered, namely a possibility that one packet is not delivered. Further, the possibility that the communication does not complete can be reduced by increasing the number of dummy packets to be transmitted after the last packet to two, three, or the like.

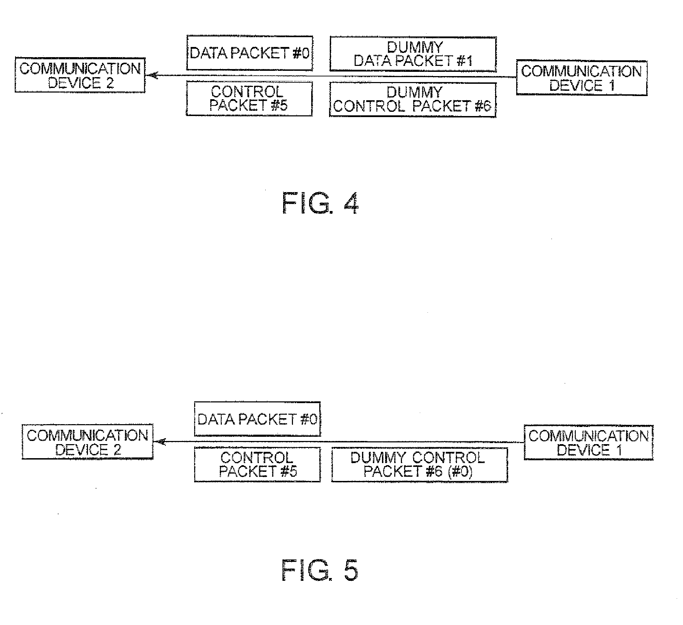

According to another variation of the above-mentioned embodiment, it is conceivable to add sequence number information on the last data packet to a dummy control packet, and to transmit the dummy control packet. A description is now given referring to FIG. 5, in which a series of data packets and control packets are transmitted from the communication device 1 to the communication device 2. In a case where the last data packet and the last control packet are a data packet #0 and a control packet #5, respectively, a dummy control packet #6 is added and transmitted after the control packet #5. The dummy control packet #6 stores the sequence number 0 for the data packet #0, which is the last data packet. The communication device 2 detects a non-delivery of the control packet #5 based on the sequence number 6 of the dummy control packet #6. Moreover, the communication device 2 also acquires the sequence number of the data packet to be received in the last place based on the sequence number of the data packet stored in the dummy control packet #6. This variation example is similar to the previous variation example in that the certainty of the communication can be increased by transmitting a plurality of dummy control packets.

The description has been given of the retransmission control of detecting an undelivered packet based on a missing sequence number, and requesting a transmission source to retransmit the undelivered packet. However, an undelivered packet or an incomplete packet may be detected by another method so that the retransmission thereof may be requested. Specifically, an undelivered or incomplete packet may be detected by applying an error detection method such as the cyclic redundancy check, the checksum, and the parity check.

Moreover, the transmission order and the reception order of packets coincide with each other in the packet communication system 100, but even in a case where the order of packets on the transmission side and the reception side may not necessarily coincide with each other, it is apparent that the transmission control for the packet communication system 100 can be applied. Moreover, in this case, it is apparent for a person skilled in the art that, in addition to or in place of the retransmission control, the order numbers for data signal transmission can be applied to sequence control for data packets, and the sequence numbers for control signal transmission can be applied to order control for control packets.

This application claims priority from Japanese Patent Application No. 2009-236765, filed on October 14, 2009, the entire disclosure of which is incorporated herein by reference.

## Claims

1. A transmission control method in packet communication of controlling transmission of a packet including a header having a sequence number area for storing a sequence number, and a payload, the payload storing a data signal or a control signal, the transmission control method in packet communication comprising;
generating, by a first communication device, a sequence number for data signal to be assigned to a data packet storing the data signal in the payload, storing the sequence number for data signal in each sequence number area of the data packet, and transmitting the data packet from the first communication device to a second communication device, the first communication device and the second communication device carrying out transmission control for the data packet based on the sequence number for data signal; and
generating, by the first communication device, a sequence number for control signal to be assigned to a control packet storing the control signal in the payload independently of the sequence number for data signal, storing the sequence number for control signal in each sequence number area of the control packet, and transmitting the control packet from the first communication device to the second communication device, the first communication device and the second communication device carrying out transmission control for the control packet based on the sequence number for control signal.

2. A transmission control method in packet communication according to claim 1. wherein the transmission control comprises packet retransmission control.

3. A transmission control method in packet communication according to claim 2, further comprising:
detecting, by the second communication device, an undelivered data packet based on the sequence number for data signal, and requesting the first communication device to retransmit the data packet based on the sequence number for data signal; and
detecting, by the second communication device, an undelivered control packet based on the sequence number for control signal, and requesting the first communication device to retransmit the control packet based on the sequence number for control signal.

4. A transmission control method in packet communication according to claim 2, further comprising:
determining, by the second communication device, presence/absence of an error of the data packet by means of error detection, and requesting the first communication device to retransmit the data packet based on the sequence number for data signal when the second communication device determines an error in the data packet; and
determining, by the second communication device, presence/absence of an error of the control packet by means of error detection, and requesting the first communication device to retransmit the control packet based on the sequence number for control signal when the second communication device determines an error in the control packet.

5. A transmission control method in packet communication according to claim 2, further comprising:
generating, by the first communication device, a dummy data packet to which a sequence number for data signal is assigned and transmitting the dummy data packet to the second communication device, and detecting, by the second communication device, based on the sequence number for data signal assigned to the dummy data packet, a non-delivery of a data packet to which a sequence number for data signal immediately before the sequence number for data signal is assigned; and
generating, by the first communication device, a dummy control packet to which a sequence number for control signal is assigned and transmitting the dummy control packet to the second communication device, and detecting, by the second communication device, based on the sequence number for control signal assigned to the dummy control packet, a non-delivery of a control packet to which a sequence number for control signal immediately before the sequence number for control signal is assigned.

6. A transmission control method in packet communication according to claim 2, further comprising:
generating and transmitting, by the first communication device, any one of a dummy data packet to which a sequence number for data signal is assigned and which stores a sequence number for control signal assigned to a control packet, and a dummy control packet to which a sequence number for control signal is assigned and which stores a sequence number for data signal assigned to a data packet to the second communication device; and
detecting, by the second communication device:
a non-delivery of the data packet based on the sequence number for data signal assigned to the dummy data packet, and a non-delivery of the control packet based on the sequence number for control signal stored in the dummy data packet; or
a non-delivery of the control packet based on the sequence number for control signal assigned to the dummy control packet, and a non-delivery of the data packet based on the sequence number for data signal stored in the dummy control packet.

7. A transmission control method in packet communication according to claim 1, wherein the transmission control comprises packet order control.

8. A packet communication system for controlling transmission of a packets including a header having a sequence number area for storing a sequence number, and a payload, the payload storing a data signal or a control signal, the packet communication system comprising:
a first communication device; and
a second communication device, wherein:
the first communication device generates a sequence number for data signal to be assigned to a data packet storing the data signal in the payload, stores the sequence number for data signal in each sequence number area of the data packet, and transmits the data packet from the first communication device to a second communication device, and the first communication device and the second communication device carry out transmission control for the data packet based on the sequence number for data signal; and
the first communication device generates a sequence number for control signal to be assigned to a control packet storing the control signal in the payload independently of the sequence number for data signal, stores the sequence number for control signal in each sequence number area of the control packet, and transmits the control packet from the first communication device to the second communication device, and the first communication device and the second communication device carry out transmission control for the control packet based on the sequence number for control signal.

9. A packet communication system according to claim 8, wherein the transmission control comprises packet retransmission control.

10. A packet communication system according to claim 9, wherein:
the second communication device detects an undelivered data packet based on the sequence number for data signal, and requests the first communication device to retransmit the data packet based on the sequence number for data signal; and
the second communication device detects an undelivered control packet based on the sequence number for control signal, and requests the first communication device to retransmit the control packet based on the sequence number for control signal.

11. A packet communication system according to claim 9, wherein:
the second communication device determines presence/absence of an error of the data packet by means of error detection, and requests the first communication device to retransmit the data packet based on the sequence number for data signal when the second communication device determines an error in the data packet; and
the second communication device determines presence/absence of an error of the control packet by means of error detection, and requests the first communication device to retransmit the control packet based on the sequence number for control signal when the second communication device determines an error in the control packet.

12. A packet communication system according to claim 9, wherein:
the first communication device generates a dummy data packet to which a sequence number for data signal is assigned and transmits the dummy data packet to the second communication device, and the second communication device detects, based on the sequence number for data signal assigned to the dummy data packet, a non-delivery of a data packet to which a sequence number for data signal immediately before the sequence number for data signal is assigned; and
the first communication device generates a dummy control packet to which a sequence number for control signal is assigned and transmits the dummy control packet to the second communication device, and the second communication device detects, based on the sequence number for control signal assigned to the dummy control packet, a non-delivery of a control packet to which a sequence number for control signal immediately before the sequence number for control signal is assigned.

13. A packet communication system according to claim 9, wherein:
the first communication device generates and transmits any one of a dummy data packet to which a sequence number for data signal is assigned and which stores a sequence number for control signal assigned to a control packet, and a dummy control packet to which a sequence number for control signal is assigned and which stores a sequence number for data signal, assigned to a data packet to the second communication device; and
the second communication device detects:
a non-delivery of the data packet based on the sequence number for data signal assigned to the dummy data packet, and a non-delivery of the control packet based on the sequence number for control signal stored in the dummy data packet; or
a non-delivery of the control packet based on the sequence number for control signal assigned to the dummy control packet, and a non-delivery of the data packet based on the sequence number for data signal stored in the dummy control packet.

14. A packet communication system according to claim 8, wherein the transmission control comprises packet order control.
